# EUROPEAN PATENT APPLICATION

(11) **EP 0 712 871 A1**
(43) Date of publication of application: **22.05.1996**
(21) Application number: 95307783.1
(22) Date of filing: 01.11.1995
(51) Int. Cl.: C08F 210/16

(54) **Process for the production of homogeneous ethylene propylene rubbers using a vanadium catalyst supported on magnesium chloride**

(30) Priority: 02.11.1994 US 333425
(71) Applicant: UNION CARBIDE CHEMICALS & PLASTICS TECHNOLOGY CORPORATION, Danbury, Connecticut 06817-0001 (US)
(72) Inventor: Vasnetsov, Sergey Andreevich, Hillsborough (08876) (US); Cann, Kevin Joseph, Rocky Hill, New Jersey 08853 (US)
(74) Representative: Allard, Susan Joyce

(57) **Abstract**

A process for polymerizing one or more olefins by reacting one or more alpha olefins having 2 to 12 carbon atoms, optionally a diene, and hydrogen, under polymerization conditions, in the presence of a catalyst system of:
(A) a transition metal catalyst comprising a vanadium compound precipitated within a liquid hydrocarbon by reduction reaction of vanadium on a spherical support of magnesium chloride; and
(B) a cocatalyst-promoter combination wherein the cocatalyst is an aluminum alkyl, an alkylaluminum halide and the promoter is an organic compound of strong chlorine donating capability.

## Description

### Field of the Invention

This invention relates to polymers of ethylene and at least one C₃ to C₁₂ alpha olefin, particularly ethylene/propylene copolymer rubbers (EPRs), which include ethylene/propylene copolymers (EPMs) and ethylene/propylene/diene termonomers (EPDMs), and a process for their production.

### Background of the Invention

Ethylene/propylene rubbers are elastomeric copolymers and terpolymers used in such applications as hose and tubing, wire and cable, gaskets, and single-ply roofing materials. They are usually formulated with fillers, oils, processing aids, and stabilizing agents, and cured by reacting the polymers with sulfur in the presence of accelerators or with a combination of sulfur and an organic peroxide such as dicumyl peroxide.

These polymers are presently manufactured commercially in solution and slurry processes with soluble vanadium catalysts. The processes are expensive to run, requiring solvent removal and steam stripping steps. In addition, these solution catalysts do not provide satisfactory particle morphology when used for production of polymers in a fluidized bed such as a gas phase fluidized bed.

The production of EPR elastomers in a gas phase fluidized bed process above their sticking temperatures is difficult due to agglomeration of the sticky, granular resin bed particles under polymerization conditions. Industry has generally solved this problem of sticky polymers by avoiding polymerization at temperatures at or above the sticking temperature of the polymer.

The term sticky polymer is defined as a polymer which, although particulate at temperatures below the sticking temperature, agglomerates at temperatures at or above the sticking temperature. Sticking temperature is defined as the temperature at which fluidization ceases due to the agglomeration of particles of polymer in a fluidized bed. The agglomeration may be spontaneous or occur on short periods of settling.

A polymer may be inherently sticky due to its chemical or mechanical properties or pass through a sticky phase during the production cycle. Sticky polymers are also referred to as non-free flowing polymers because of their tendency to compact into aggregates of much larger size than the original particles and not flow out of the relatively small openings in the bottom of product discharge tanks or purge bins. Polymers of this type show acceptable fluidity in a gas phase fluidized bed reactor; however, once motion ceases, the additional mechanical force provided by the fluidizing gas passing through the distributor plate is insufficient to break up the aggregates which form and the bed will not refluidize.

U.S. Patent Nos. 4,994,534 and 5,304,588 disclose the production of EPRs in a fluidized bed using an alpha olefin polymerization catalyst such as a transition metal catalyst of vanadium and/or titanium and an inert particulate material as a fluidization aid. The EPRs are produced by polymerizing at or above the softening or sticking temperature of the polymer product. This process produces EPRs more efficiently and economically and avoids post-reaction treatments associated with polymer products produced in solution and slurry processes.

U.S. Patent No. 5,070,054 discloses a precipitation process for preparing a Ziegler-Natta type catalyst based on a vanadium compound precipitated on a MgCl₂ spherical support which can be used for manufacturing in a gas phase process elastomeric copolymers of propylene. According to this patent, elastomeric copolymers may be manufactured in a gaseous phase in a fluidized and/or mechanically stirred bed reactor. The propylene copolymerization reaction of this reference can be performed by employing the catalyst together with a cocatalyst chosen from the organometallic compounds of a metal belonging to groups I to III of the Periodic Classification of the Elements and with an activator or promoter chosen from halogenated hydrocarbons. Example 13 of the patent employs the catalyst and triisobutylaluminum and chloroform, as cocatalyst and activator, respectively, to copolymerize ethylene, propylene, and ethylidenenorbomene. Unfortunately, the vanadium compound prepared by the process of this patent in combination with triisobutylaluminum and chloroform produces a heterogeneous polymer product. It would be desirable to produce homogeneous polymer products such as homogeneous EPR and EPDM. A homogeneous polymer product is one in which the copolymer or terpolymer has a statistically random distribution of comonomers.

### SUMMARY OF THE INVENTION

The present invention provides a process for polymerizing or copolymerizing one or more alpha olefins, which process comprises reacting one or more alpha olefins having 2 to 12 carbon atoms, optionally a diene, and hydrogen, under polymerization conditions, in the presence of a catalyst system comprising:
(A) a transition metal catalyst comprising a vanadium compound precipitated within a liquid hydrocarbon by reduction reaction of vanadium on a spherical support of magnesium chloride, which precipitation is carried out by bringing into contact within the liquid hydrocarbon: (a) a vanadium-reducing agent chosen from organometallic compounds, with (b) a vanadium compound soluble in the liquid hydrocarbon, containing at least one halogen and optionally at least one alkoxy group, and (c) a solid support containing (i) from 80 to 99.5 mol % of magnesium dichloride and optionally (ii) from 0.5 to 20 mol % at least one organic electron-donor compound (ED), free from labile hydrogen; and
(B) a cocatalyst-promoter combination which is
   (1) an aluminum alkyl cocatalyst having the formula AlR₃ wherein each R is independently an alkyl having 1 to 14 carbon atoms and a promoter that is (a) a saturated or unsaturated aliphatic halocarbon having at least 3 carbon atoms and at least 6 halogen atoms or (b) a haloalkyl substituted aromatic hydrocarbon wherein the haloalkyl substituent has at least 3 halogen atoms; or
   (2) an alkylaluminum halide cocatalyst having the formula AlR(₃₋ₐ)Xₐ wherein each R is independently alkyl having 1 to 14 carbon atoms; each X is independently chlorine, bromine, or iodine and a is 1 to 2 and a promoter that is selected from the group consisting of (a) a chlorinated ester having at least 2 chlorine atoms, (b) a saturated or unsaturated aliphatic halocarbon having at least 3 carbon atoms and at least 6 halogen atoms and (c) a haloalkyl substituted aromatic hydrocarbon wherein the haloalkyl substituent has at least 3 halogen atoms.

### BRIEF DESCRIPTION OF THE DRAWING

Figure 1 is a graphic depiction demonstrating that a substantial improvement in homogeneity of copolymers was produced when DEAC/ETCA was used as the co-catalyst/promoter combination with a vanadium catalyst (Examples 5 and 6).

### DETAILED DESCRIPTION OF THE INVENTION

### Supported Catalyst Precursor

According to the present invention, the preparation of the catalyst employs a magnesium chloride support. The support is substantially free from products containing a Mg-C bond, that is, the ratio of the number of Mg-C bonds to the number of magnesium atoms in the support is less than 0.001. The precipitation of the vanadium compound on the support is not therefore initiated spontaneously by a reaction of reduction of the vanadium by a reducing agent present in the support. The reduction of the vanadium is performed by means of a reducing agent chosen from organometallic compounds, which is brought into contact with the particular magnesium chloride support and the vanadium compound. In this preparation, the vanadium compound is fixed on the solid support without being substantially precipitated beside the particles of the support.

The particular magnesium chloride support includes a relatively large quantity of an organic electron-donor compound (ED). The support contains from 80 to 99.5 mol % of magnesium dichloride and from 0.5 to 20 mol % of ED. It preferably contains from 80 to 95 mol % of magnesium dichloride and from 5 to 20 mol % of ED and yields excellent vanadium-based catalysts for the polymerization of olefins. It is particularly desirable to manufacture elastomeric propylene copolymers using a support containing from 80 to 90 mol % of magnesium dichloride and from 10 to 20 mol % of ED.

The organic electron-donor compound (ED) is well known and is also referred to as a Lewis base. It is free from labile hydrogen and, necessarily is not chosen from water, alcohols or phenols, for example. The ED can have a relatively low complexing power in relation to magnesium dichloride and is generally chosen from ethers, thioethers, sulphones, sulphoxides, phosphines, amines and amides. Ethers are preferably employed.

Preferably the support is in the form of a homogeneous composition in which the ED is distributed homogeneously throughout the magnesium chloride particle, from the core to the periphery of the latter, and not only at its periphery. Such a support is obtained by precipitation. The ED is chosen from products not likely to react with the reactants employed for the precipitation. For example, the ED is not selected from carboxylic acid esters which react with Grignard or organomagnesium compounds.

According to U.S. Patent No. 5,070,054 the support can be further characterized as consisting of spherical particles which have a mass-average diameter of 10 to 100 microns, preferably of 20 to 50 microns. The particles of the support can have a narrow particle size distribution such that the ratio of the mass-average diameter Dm to the number-average diameter (Dm/Dn) is less than 2. More particularly, the particle size distribution of these particles may be extremely narrow, such that the ratio Dm/Dn is from 1.1 to 1.5. A substantially complete absence of particles of a diameter greater than 1.5 times Dm or smaller than 0.6 times Dm may be noted. Particle size distribution can also be more than 90% by weight of the particles of the same single batch are within the range of Dm ± 10%.

By spherical particles is meant particles which are substantially spherical, that is, having a ratio of the long axis to the short axis equal to or less than approximately 1.5, preferably less than 1.3.

The specific surface area of the support particles can be from 20 to 100m/g in accordance with the well known Surface Area Measurement Method of S. Brunauer, P.H. Emmett, and E. Teller (referred to as BET). Preferably the specific surface area is from 30 to 60m/g BET and the relative density of these particles can be approximately 1.2 to 2.1.

The support is preferably prepared by reacting a dialkylmagnesium compound with an organic chlorine compound in the presence of the electron-donor compound (ED). The dialkylmagnesium compound is a product of the formula: R¹MgR, in which R¹ and R are the same or different alkyl radicals having from 2 to 12 carbon atoms. The dialkylmagnesium compound is directly soluble in the hydrocarbon medium of the preparation of the support.

The organic chlorine compound is an alkyl chloride having the formula: R³Cl in which R³ is a secondary or, preferably, tertiary alkyl radical containing from 3 to 12 carbon atoms. The ED employed is preferably an ether of formula: R⁴OR⁵ in which R⁴ and R⁵ are the same or different alkyl radicals having from 1 to 12 carbon atoms.

The various reactants used for the preparation of the support are employed as follows: the molar ratio R³Cl/R¹MgR is from 1.9 to 2.5, preferably from 2 to 2.3; the molar ratio ED/R¹MgR is from 0.1 to 1.2, preferably from 0.3 to 0.8

A precipitation reaction between R¹MgR and R³Cl in the presence of the ED compound occurs when the reactants are stirred in a liquid hydrocarbon. It is known by those skilled in the art that physical factors such as the viscosity of the medium, the method and rate of stirring and the conditions of use of the reactants can play a major role in the form, the structure, the size and the particle size distribution of the precipitated particles. However, to obtain the desired support essentially characterized by the presence of a large quantity of ED, generally the precipitation reaction is conducted at a relatively low temperature, ranging from 10° to 50°C., preferably from 15° to 35°C. Additionally, the precipitation reaction should take place extremely slowly, over a period of at least 10 hours, preferably a period ranging from 10 to 24 hours, so as to permit the insertion of a large quantity of the ED with uniform dispersion in the support.

Typically, the catalyst preparation process consists of precipitating a vanadium compound on the magnesium chloride support using a liquid hydrocarbon. The liquid hydrocarbon can be one or more alkanes, such as n-hexane or n-heptane. The vanadium compound is soluble in the liquid hydrocarbon. In general, vanadium compounds which are soluble in hydrocarbons are those in which the vanadium has a maximum valency of 4 and/or the vanadyl group has its maximum valency of 3.

The vanadium compound contains at ieast one halogen, (X), and/or at least one alkoxy group of formula OR⁶. Catalysts employed in the manufacture elastomeric propylene copolymers in a gaseous phase are prepared with a vanadium compound in which the molar ratio X/OR⁶ is from 0.05 to 20, preferably from 1 to 10.

More particularly, the vanadium compound corresponds to either of the two general formulae:

V(OR⁶)₄₋ₘXₘ (I)

or

VO(OR⁶)₃₋ₙXₙ (II)

In formulae I and II,
R⁶ denotes an alkyl radical having from 1 to 12 carbon atoms;
X is a halogen atom, such as bromine or chlorine;
m is an integral or fractional number which may range from 0.2 to 3.8, preferably from 2 to 3.6; and
n is an integral or fractional number ranging from 0.14 to 2.85, preferably from 1.5 to 2.7.

The vanadium compound can be prepared by mixing a vanadium halide (VOX₃ or VX₄) with a vanadium alkoxide (VO(OR⁶)₃ or V(OR⁶)₄), or by mixing a vanadium halide with an alcohol (R⁶OH). The groups X and R⁶ of the formulae are defined as above. Among the vanadium halides, vanadium tetrachloride or vanadyl trichloride are preferred; and, among the vanadium alkoxides, it is preferred to employ vanadyl tri-n-propoxide, vanadyl triisopropoxide or vanadium tetra-n-propoxide. The vanadium compound can be prepared either before its use for the preparation of the catalyst or directly within the liquid hydrocarbon where the precipitation of the catalyst will take place, optionally in the presence of the support.

The quantity of vanadium compound employed to prepare the catalyst is dependent upon the quantity of vanadium to be fixed in the support and on the amount of ED present in the support. The quantity of vanadium compound to be employed during the catalyst preparation is generally from 0.05 to 2, preferably from 0.1 to 1 mole per mole of magnesium dichloride of the support.

Catalyst preparation process consists in precipitating the vanadium compound on the support by a reaction of reduction of the vanadium with a reducing agent chosen from organometallic compounds which include elements belonging to groups II or III of the Periodic Classification of the Elements. Organoaluminum, organomagnesium or organozinc compounds are preferably employed. Most preferably the organometallic compound is an organoaluminum. Suitable organoaluminums include a trialkyaluminum, such as triethylaluminum or triisobutylaluminum, or preferably an alkylaluminum halide, such as diethylaluminum chloride. The reducing agent employed during the catalyst precipitation is generally from 0.05 to 1.5, preferably from 0.1 to 1 mole per mole of magnesium dichloride of the support. The catalyst can be prepared in the presence of an additional quantity of an electron-donor compound which compound is the same as or different from that present in the support.

The vanadium fixed in the support is essentially in the reduced state. The precipitation of the catalyst within the liquid hydrocarbon is performed by bringing the support into contact with the vanadium compound and the reducing agent at a temperature which may be from 0° to 120°C, preferably from 50° to 90°C, for about 0.5 to 15 hours.

The precipitation of the catalyst can be performed using several procedures. For example, the reducing agent and the vanadium compound can be added simultaneously to a suspension of the magnesium chloride support in the liquid hydrocarbon and stirred for a period of 0.5 to 15 hours. Another method is to add the reducing agent and the vanadium compound successively in any order to the suspension of the magnesium chloride support. To increase the amount of vanadium fixed in the support, it is desirable to place the reducing agent in contact with the suspension of magnesium chloride support and then to add the vanadium compound to this suspension. Although most of the vanadium compound employed is fixed in the support, the catalyst can be washed one or more times with a liquid hydrocarbon to remove V species that are not fixed on the support.

It has been observed, for example in U.S. Patent No. 5,070,054, that the essentially amorphous structure and the morphology of the support do not change during the preparation of the catalyst. That is, the catalyst consists of particles whose physical properties are essentially identical with those of the particles of the initial support. It was further observed that the catalyst consisted of spherical particles having a mass-average diameter of 10 to 100 microns, preferably of 20 to 50 microns, and a particle size distribution of less than 2, as measured by the Dm/Dn ratio.

Generally about 80% and often more than 90% of the vanadium compound employed during the preparation is fixed in the support. Further, the vanadium compound is fixed homogeneously throughout the support and distributed homogeneously in each particle of support. It has been observed that the organic electron-donor compound initially present in the support, diminishes appreciably in the catalyst. From this one skilled in the art can conclude that the vanadium compound can be fixed in the support wherever the ED leaves a vacancy. Also, while the catalyst includes a part of the reducing agent employed during the precipitation, it is in a form converted by the reduction reaction. The catalyst thus obtained may contain, per mole of magnesium dichloride, from 0.05 to 2 moles of vanadium, from 0.01 to 0.1 mole of electron-donor compound and from 0.05 to 1 mole of reducing agent in a form converted by the reduction reaction.

Alternatively, spray-drying technology known to those skilled in the art can be used to generate well shaped catalyst precursors having little or no silica or other inorganic solids content.

### Cocatalyst and Promoters

Cocatalysts of the present invention are a compound having the formulae AlR₃, R₂AlX or AlR₃₋ₐ₎Xₐ wherein each R is independently an alkyl having 1 to 14 carbon atoms, a cycloalkyl, an aryl, or hydrogen; each X is independently chlorine, bromine, or iodine; and a is 1 to 2. Optionally, at least one R can be a hydrocarbyl; and two or three R radicals can be joined to form a heterocyclic structure. Each R which is a hydrocarbyl radical can have 1 to 20 carbon atoms, and preferably has 1 to 10 carbon atoms. Examples of cocatalysts can include triisobutylaluminum, trihexylaluminum, diisobutylaluminum hydride, dihexylaluminum dihydride, diisobutylhexylaluminum, isobutyl- dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, tritolylaluminum, dibutylaluminum chloride, diethylaluminum chloride, and ethylaluminum sesquichloride. The cocatalyst can be the same as the alkylaluminum with which the vanadium compound is reacted to form the catalyst precursor.

Promoters of the present invention are organic chlorine donors and include, but are not limited to, a chlorinated ester, a saturated aliphatic halocarbon, and an unsaturated aliphatic halocarbon.

The promoter is a chlorinated ester having at least 2 chlorine atoms or a perchlorinated ester. Suitable esters are Cl₃CCOOC₂H₅ (ethyl trichloroacetate); Cl₃CCOOCH₃ (methyl trichloroacetate; CCl₃CCl=CClCOOC₄H₉; C₆H₅CCl₂COOR⁸ wherein R⁸ is an alkyl radical having 1 to 8 carbon atoms; and Cl₂C=CClCCl₂COOC₄H₉.

The promoter can also be a saturated aliphatic halocarbon having the formula C₃(X)ₐ(F)_{b}(H)_{c} wherein each X is independently chlorine, bromine, or iodine; a is an integer from 6 to 8; b and c are integers from 0 to 2; and a+b+c equals 8. Examples of these halocarbon promoters are hexachloropropane, heptachloropropane, and octachloropropane. These saturated halocarbon promoters are mentioned in United States Patent No. 4,892,853.

In addition, the promoter can also be an unsaturated aliphatic halocarbon such as perchloropropene or any unsaturated halocarbon having a CX₃ group attached to a C=C group wherein each X is independently chlorine, bromine, or iodine, or a haloalkyl substituted aromatic hydrocarbon wherein the haloalkyl substituent has at least 3 halogen atoms such as trichlorotoluene, and trichloroxylene. Again, the halogen can be chlorine, bromine, or iodine. The number of carbon atoms in the halocarbon or the haloalkyl substituent can be 1 to 14, and the number of benzene rings in the halocarbon or the aromatic hydrocarbon can be 1 to 3, but is preferably one.

The cocatalyst can be present in the catalyst system in an amount of about 10 to about 500 moles of cocatalyst per gram atom of vanadium, and is preferably introduced in an amount of about 30 to about 150 moles of cocatalyst per gram atom of vanadium. About 0.01 to about 10 moles, and preferably about 0.1 to about 2 moles, of promoter can be used per mole of cocatalyst. The catalyst precursor, supported or unsupported, is, generally, introduced into the polymerization reactor just prior to, simultaneously with, or after the introduction of the monomer(s) to be polymerized. The cocatalyst and promoter are preferably added separately neat or as solutions in an inert solvent, such as isopentane, to the polymerization reactor at the same time as, or prior to, the initiation of the flow of monomer(s).

### Prepolymerization

The catalyst precursor described above can be used in prepolymer form. A technique for prepolymerization can be found in United States Patent No. 4,970,279. Typically, the prepolymerization is carried out in the liquid phase in a similar manner to a diluent slurry polymerization. The catalyst system used in the prepolymerization is the same one that will be used in the fluidized bed polymerization. Preferred prepolymerization cocatalysts are diethylaluminum chloride and dibutylaluminum chloride. The difference lies in the monomers used and weight ratio of monomer(s) to catalyst precursor, which is at least about 10:1, and is typically about 50:1 to about 300:1. It should be pointed out that the numbers vary with the particular catalyst system selected. Examples of suitable prepolymers are homoprepolymers of ethylene, ethylene/propylene coprepolymers, ethylene/1-hexene coprepolymers, ethylene/propylene/1-hexene terprepolymers, and ethylene/propylene/diene terprepolymers. The prepolymer does not have to be the same as the resin product of the main polymerization.

The amount of prepolymer formed, in terms of grams of prepolymer per gram of catalyst precursor, generally depends on the composition of the prepolymer, the composition of the polymer being produced, and the productivity of the catalyst employed. The prepolymer loading is chosen so as to minimize prepolymer residue in the product resin. When using ethylene homoprepolymers or ethylene/propylene coprepolymers, prepolymer loading can be in the range of about 10 to about 500 grams of prepolymer per gram of catalyst precursor and is preferably in the range of about 50 to about 300 grams of prepolymer per gram of catalyst precursor.

A typical prepolymerization can be carried out in a slurry prepolymerizer. The equipment includes a monomer feed system, a reaction vessel, and an inert screener. The reactor is a jacketed pressure vessel with a helical ribbon agitator to give good solids mixing, and with a bottom cone to facilitate solids discharge. Ethylene is fed from cylinders, with the pressure regulated, through 4A or 13X molecular sieves to remove impurities, and then through a flow meter to measure flow rate. Other olefins, if required, are fed from cylinders via a dip tube with nitrogen pressure supplied to the cylinder headspace. They also pass through 4A or 13X molecular sieves and through a flow meter. The monomers can be fed to either the reactor headspace or subsurface, with subsurface preferred as it increases the reaction rate by eliminating one mass transfer step. Temperature is controlled with a closed loop tempered water system. Pressure is controlled with a vent/make-up system.

The finished prepolymerized catalyst is screened to remove skins, agglomerates, and other types of oversize particles that could cause feeding difficulties into the gas phase reactor. The screening is done with a vibratory screener with a 20 mesh screen. The screener is kept under a nitrogen atmosphere to maintain the prepolymerized catalyst activity. Oversize material is collected for disposition. The desired undersize fraction is discharged into a cylinder for storage and shipping.

The typical prepolymerization is a slurry polymerization of ethylene and, optionally, a comonomer under mild conditions. Isopentane, hexane, and heptane can be used as the solvent, with isopentane preferred for its higher volatility. Mild conditions are necessary to minimize catalyst decay during the prepolymerization so that there is sufficient activity for the subsequent gas phase polymerization, which may occur months after the prepolymerization. Such conditions will vary with different catalyst systems, but are typically temperatures of about 25 to about 70°C, monomer partial pressures of about 15 to about 40 psi, and levels of cocatalyst and catalyst promoter of about 1 to about 5 moles per mole of vanadium. The prepolymer loading ranges from about 10 to about 500 grams per gram of supported catalyst precursor, preferably from about 50 to about 300 grams per gram. The comonomer content of the prepolymer ranges from 0 to 15 weight percent. Hydrogen, or other chain transfer agents, can be added at the start of polymerization or throughout the polymerization to control molecular weight. Additional olefins or dienes may also be added. When the polymerization is complete, the agitator is stopped and the solids are allowed to settle so that the excess solvent can be removed by decanting. The remaining solvent is removed by drying, using low temperatures to avoid catalyst decay. The dried prepolymer catalyst is discharged to a storage cylinder through an inert screener, to remove oversize (+20 mesh) material.

### Polymerization of Ethylene Propylene Rubbers and Other Polymers

EPR polymerization can be conducted in a solution or in a slurry as described above for the prepolymerization; however, it is preferably carried out in the gas phase, most preferably in a fluidized bed made up of particulate EPM or EPDM. The fluidized bed can be a stirred fluidized bed reactor or a fluidized bed reactor, which is not stirred. The fluidized bed has a superficial velocity of about 1 to about 4.5 feet per second and preferably about 1.5 to about 3.5 feet per second can be used. The total reactor pressure can be in the range of about 150 to about 600 psia and is preferably in the range of about 250 to about 500 psia. The ethylene partial pressure can be in the range of about 25 psi to about 350 psi and is preferably in the range of about 80 psi to about 250 psi. The gaseous feed streams of ethylene, propylene, and hydrogen are preferably fed to the reactor recycle line while liquid ethylidene norbornene or another diene, if used, and the cocatalyst solution are preferably fed directly to the fluidized bed reactor to enhance mixing and dispersion. The catalyst precursor or the prepolymer containing the catalyst precursor is transferred into the fluidized bed from the catalyst feeder. The composition of the EPM or EPDM product can be varied by changing the propylene/ethylene molar ratio in the gas phase and the diene concentration in the fluidized bed. The product is intermittently discharged from the reactor as the bed level builds up with polymerization. The production rate is controlled by adjusting the catalyst feed rate.

The molar ratio of monomers in the reactor will be different for different catalyst systems, as is well-known to those skilled in the art. The propylene/ethylene molar ratio is adjusted to control the level of propylene incorporated into the terpolymer. For the vanadium catalyst described above, a range ofabout 0.35:1 to about 3:1 is preferred. The hydrogen/ethylene molar ratio is adjusted to control average molecular weights of the terpolymer. For the same catalyst system, a range of about 0.001:1 to about 0.3:1 is preferred. The level of diene in the bed, if used, is in the range of about 1 to about 15 weight percent based on the weight of the bed, and is preferably in the range of about 2 to about 10 weight percent.

EPRs produced in the invention can optionally contain non-conjugated dienes other than ethylidene norbornene (ENB). These non-conjugated diene monomers may be straight chain, branched chain or cyclic hydrocarbon dienes having from about 5 to about 15 carbon atoms. Examples of suitable non-conjugated dienes are straight chain acyclic dienes such as 1,4-hexadiene, 1,5-hexadiene, 1,7-octadiene, 1,9-decadiene and 1,6-octadiene. Illustrative branched chain acyclic dienes include such as 5-methyl-1,4-hexadiene, 3,7-dimethyl-1,6-octadiene, 3,7-dimethyl-1,7-octadiene and mixed isomers of dihydromyricene and dihydrocinene. Single ring alicyclic dienes can include, for example, 1,3-cyclopentadiene, 1,4-cyclohexadiene, 1,5-cycloctadiene and 1,5-cyclododecadiene. Illustrative multi-ring alicyclic fused and bridged ring dienes such as tetrahydroindene, methyl tetrahydroindene, dicyclopentadiene, bicyclo(2,2,1)-hepta-2,5-diene, alkenyl, alkylidene, cycloalkenyl and cycloalkylidene norbornenes such as 5-methylene-2-norbornene, 5-propenyl-2-norbornene, 5-iso-propylidene-2-norbornene, 5-(4-cyclopentenyl)-2-norbornene, 5-cyclohexylidene-2-norbornene, 5-vinyl-2-norbornene and norbornadiene can be employed in the process of the present invention. Dienes which are especially preferred include 1,4-hexadiene, dicyclopentadiene dimer, and 5-ethylidene-2-norbornene.

Steps can be taken to reduce agglomeration of polymer particles in the reactor. For example, fluidization aids can be provided as described in United States Patent Nos. 4,994,534 and 5,304,588. Examples of fluidization aids can include carbon black, silica, clays, talc, and other inert particulate materials which are chemically inert to the reaction. Also, the product discharge line between the reactor and the product pot is often plugged with chunks between intervals of product drops. A continuous purge flow of nitrogen in the line prevents the plugging problem. Also, coating the reactor surface with a low surface energy material is shown to be beneficial to slow down the rate of fouling build up. In addition, control of the electrostatic level in the bed prevents static induced particle agglomeration. Static can be adjusted to a satisfactory level by controlled use of reaction rate, quick change of gas composition, selective use of static-neutralizing chemicals, and surface passivation with aluminum alkyls.

Static can also be controlled by using small amounts of an inert conductive particulate material such as carbon black. The amount of inert particulate material is that which is sufficient to control static, i.e., about 0.5 to about 1.5 percent by weight based on the weight of the fluidized bed. Carbon black is the preferred antistatic material. The mean particle size of the inert conductive particulate material is in the range of about 0.01 to about 150 microns, preferably to about 10 microns. The mean particle size can refer to the particle per se or to an aggregate as in the case of carbon black. The carbon black materials employed can have a primary particle size of about 10 to about 100 nanometers and an average size of aggregate (primary structure) of about 0.1 to about 10 microns. The surface area of the carbon black can be about 30 to about 1500 square meters per gram and can display a dibutylphthalate (DBP) absorption of about 80 to about 350 cubic centimeters per 100 grams. It is preferred to treat the particulate material prior to its introduction into the reactor to remove traces of moisture and oxygen. This can be accomplished by purging the material with nitrogen gas, and heating using conventional procedures. Other antistatic agents are also found to be effective in keeping the static level under control as mentioned, for example, in United States Patent No. 5,194,526.

The residence time of the mixture of comonomers, resin, catalyst, and optional diene in the fluidized bed can be in the range of about 1.5 to about 8 hours and is preferably in the range of about 2 to about 4 hours. The final EPM or EPDM product can contain the following amounts of reacted comonomers: about 35 to about 80 percent by weight ethylene; about 18 to about 50 percent by weight propylene; and about 0 to about 15 percent by weight diene. The crystallinity, also in weight percent based on the total weight of the EPM or EPDM, can be in the range of zero (essentially amorphous) to about 15 percent by weight (nearly amorphous). The Mooney viscosity can be in the range of about 10 to about 150 and is preferably about 30 to about 100. The Mooney viscosity is measured by introducing the EPM or EPDM into a vessel with a large rotor, preheating for one minute at 100°C, and then stirring for four minutes at the same temperature. The viscosity is measured at 100°C in the usual manner.

The fluidized bed reactor can be the one described in United States Patent Nos. 4,994,534 or 4,482,687 or another conventional reactor for the gas phase production of, for example, polyethylene. The bed is usually made up of the same granular resin that is to be produced in the reactor. Thus, during the course of the polymerization, the bed comprises formed polymer particles, growing polymer particles, and catalyst particles fluidized by polymerizable and modifying gaseous components introduced at a flow rate or velocity sufficient to cause the particles to separate and act as a fluid. The fluidizing gas is made up of the initial feed, make-up feed, and cycle (recycle) gas, i.e., monomer and, if desired, modifiers and/or an inert carrier gas. A typical cycle gas is comprised of ethylene, nitrogen, hydrogen, and propylene, either alone or in combination. The process can be carried out in a batch or continuous mode, the latter being preferred. The essential parts of the first reactor are the vessel, the bed, the gas distribution plate, inlet and outlet piping, a compressor, a cycle gas cooler, and a product discharge system. In the vessel, above the bed, there is a velocity reduction zone, and in the bed, a reaction zone. Both are above the gas distribution plate.

Variations in the reactor can be introduced if desired. One involves the relocation of the cycle gas compressor from upstream to downstream of the cooler and another involves the addition of a vent line from the top of the product discharge vessel (stirred product tank) back to the top of the reactor to improve the fill level of the product discharge vessel.

The advantages of the invention are found in improved polymer homogeneity as evidenced by cure performance; improvement in high temperature crystallinity of the polymer; the provision of a catalyst system, which is equal to or better than commercially available catalyst systems for the production of both EPM and EPDM and polyethylenes of varying densities and monomer content; and good particle morphology.

As noted, the process of this invention can also be used to polymerize and/or copolymerize one or more C₂ to C₁₂ alpha olefins. Polyethylenes produced by the process are homogeneous, characterized by narrow molecular weight distributions and narrow comonomer distributions. A typical process in which the catalyst system described above can be used can be found in United States Patent No. 4,508,842. The catalyst precursor of this invention can be used in the process described in U.S. Patent No. 4,508,842 in prepolymer form in polyethylene production just as in EPR production. The preferred temperature for the production of homogeneous polyethylenes is in the range of about 45° C to about 85° C. The polyethylenes are, generally, copolymers of ethylene and one or more alpha-olefins having 3 to 12 carbon atoms, and preferably 3 to 8 carbon atoms. Examples of the alpha-olefins are propylene, 1-butene, 1-hexene, 4-methyl-1-pentene, and 1-octene. Typical comonomer molar ratios are as follows: the propylene/ethylene ratio can be in the range of about 0.05 : 1 to about 2.5 : 1 and is preferably in the range of about 0.25 : 1 to about 1.5 : 1. The 1-hexene/ethylene molar ratio can be in the range of about 0.005 : 1 to about 0.050 : 1 and is preferably in the range of about 0.008 : 1 to about 0.012 : 1.

### Polymers Produced

The process of the present invention is employed to make sticky polymers which can include ethylene/propylene rubbers and ethylene/propylene/ unconjugated diene termonomer rubbers, high ethylene content propylene/ethylene block copolymers, poly(1-butene) (when produced under certain reaction conditions), very low density flow modulus) polyethylenes, i.e., ethylene butene rubbers or hexene containing terpolymers, ethylene/propylene/ethylidenenorbornene and ethylene/propylene/hexadiene terpolymers of low density.

The process of the present invention can also be used to polymerize either ethylene alone to prepare a homopolymer of polyethylene or to polymerize ethylene in conjunction with one or more higher monomers, preferably at least one C₃ to C₁₂ alpha-olefin monomer, to prepare a copolymer. These alpha olefins are preferably selected from the group consisting of propylene, butene-1, pentene-1, hexene-1, and octene-1. Most preferably the polymers are made from ethylene and hexene-1.

The invention is illustrated by the following examples.

### EXAMPLES

In the examples, the reactor used for the preparation of the catalyst precursor and the polymerization was a one liter, jacketed, stirred autoclave reactor. The catalyst system included a vanadium based catalyst precursor; a cocatalyst, and a promoter. The EPR polymerization was carried out in a hexane slurry.

### Preparation of Supported Catalyst Precursor

Catalyst preparation procedure includes two steps: preparation of catalyst support, MgCl₂, followed by anchoring V complexes on it. MgCl₂ was used to prepare two Vanadium-Magnesium Catalysts (VMC-1 and VMC-2).

### Preparation of MgCl₂

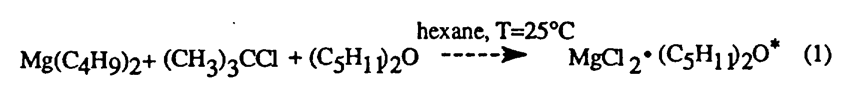

Reaction (1) was performed under N₂ at 25°C. (CH₃)₃CCl(0.294 M, 32 ml) and Isoamyl ether (13.2 ml) were introduced dropwise into 500 ml three-neck flask containing Mg(C₄H₉)₂ (0.123M, as 1.0M hexane solution) and 90 ml of purged hexane. To ensure the completion of chlorination, small excess of (CH₃)₃CCl was used [(CH₃)₃CCl/MgCl₂ = 2.39]. After four hours of stirring the suspension was allowed to settle down; MgCl₂ was washed five times with hexane, then dried under vacuum.

Particle size analysis by Malvern showed a fairly narrow symmetrical particle size distribution with maximum at ~90-100 microns.

Element analysis: [Mg]=20.2 wt. %, Mg/Cl ratio = 2.02.

### Preparation of VMC-1

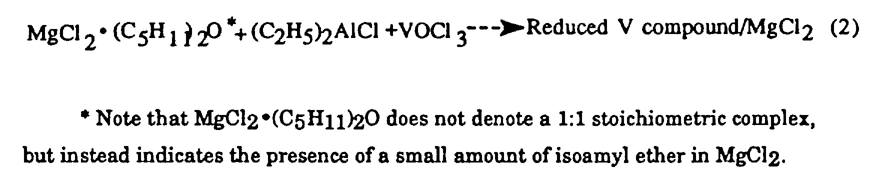

(C₂H₅)₂AlCl(0.01 M in 50 ml hexane) was slowly added to MgCl₂ (0.05 M, 6.46 g) suspended in 75 ml hexane. The mixture was stirred for an hour at 25°C and then for one hour at 35°C. After slow addition of VOCl₃ solution (0.01 M in 50 ml hexane), the mixture was held at 50°C for four hours, then at 80°C for two hours. To remove the unreacted (C₂H₅)₂AlCl and VOCl₃, the catalyst was washed with 120 ml hexane twice at 50°C and three times at 25°C. The catalyst was dried under vacuum for several hours.

Element analysis (wt. %): [V]=5.5 (1.08 mmole V/g catalyst), [Al]=2.22 and [Mg]=14.0. Potentiometric KMnO₄ titration method indicated that the average vanadium oxidation state in the catalyst was 3.0.

### Preparation of VMC-2

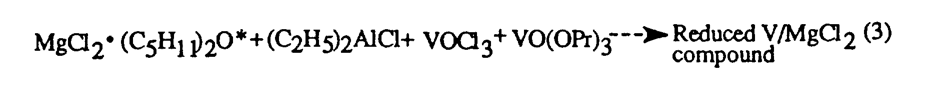

The preparation of VMC-2 was similar to the preparation of VMC-1, except for using a mixture of V complexes VOCl₃/VO(OPr)₃ in 3:2 molar ratio.

Element analysis: [V]=6.4% (0.84 mmole V/g catalyst), [Al]=2.8 and [Mg]=15.5 wt. %. The average vanadium oxidation state in the catalyst was 2.5. The above vanadium oxidation state results agree well with the observations reported in U.S. Patent No. 5,070,054.

EPDM Polymerization. In all the examples which follow, a one liter stirred batch reactor was charged, under nitrogen, with 500 milliliters of dry hexane. The catalyst precursor was then charged, followed by a one time batch charge of hydrogen for molecular weight control. The reactor was pressurized to 120 psi at the desired reaction temperature with ethylene and propylene to establish a 1:1 molar ratio gas composition. The ENB was charged next, when used. The initial charge of ENB was 5 milliliters. The promoter was charged and the reactor solution temperature was lowered 5 to 10° C before the addition of the cocatalyst. The cocatalyst was added and the reactor solution was heated to the desired temperature. Propylene and ethylene were fed at a 0.35 C₃/C₂ molar ratio so as to maintain reactor pressure at 120 psi. ENB, when used, was added as needed to maintain constant concentration in the reactor. At the end of a reaction period of 60 minutes, ethanol was injected into the reaction solution to quench the polymerization reaction. The polymer was isolated by coagulation in methanol followed by filtration and evaporation of the methanol and hexane.

Catalyst productivity was determined by mass balance, and the polymer composition was determined by NMR analysis.

Polymerization process variables and various properties of the resin are set forth in the Table 1.

Comparative Example A. TIBA/CHCl₃ was used as a cocatalyst/promoter combination, as recommended in U.S. Patent 5,070,054. As set forth in Table 1, using this combination with a MgCl₂-supported V catalyst (VMC-1) resulted in a low ENB incorporation and a very poor cure.

Comparative Example B. Example A was repeated except that another supported V catalyst (VMC-2) was used. The result is set forth in Table 1. From Examples A and B in Table 1 it can be seen that the catalyst system produced a heterogeneous product.

Example 1: Example A was repeated except that DEAC/ETCA was used as the cocatalyst/promoter combination with the V catalyst (VMC-1). From Table 1, it can be seen that homogeneous EPDM with excellent cure was produced.

Examples 2-4: Example 1 was repeated except that another V catalyst (VMC-2) was employed which also produced EPDM with excellent cure in the wide range of ENB content, which is important for production of a variety of EPDM resins.

These results clearly demonstrate that a proper choice of a cocatalyst/promoter combination is crucial for homogeneity of the produced EPDM, and that excellent cure results can be achieved with DEAC/ETCA system, but not with TIBA/CHCl₃ system.

1-Hexene/Ethylene Copolymerization. To a one liter stirred batch reactor was charged, under nitrogen, 500 milliliters of dry hexane and a required amount of 1-hexene. The catalyst precursor was then charged, followed by a one time batch charge of hydrogen for molecular weight control. The reactor was pressurized to 100 psi at the desired reaction temperature with ethylene. The promoter was charged and the reactor solution temperature was lowered 5 to 10° C before the addition of the cocatalyst. The cocatalyst was added and the reactor solution was heated to the desired temperature. Ethylene was fed to maintain reactor pressure at 100 psi. At the end of a reaction period of 30 or 60 minutes, ethanol is injected into the reaction solution to quench the polymerization reaction. The polymer was isolated by evaporating the hexane suspension.

Catalyst productivity was determined by mass balance, and the polymer composition was determined by NMR analysis.

Polymerization process variables and various properties of the resin are set forth in the Table 2.

Comparative Example C. In the above procedure, TIBA/CHCl₃ was used a cocatalyst/promoter combination, as recommended in U.S. Patent 5,070,054. Using this combination with a MgCl₂-supported V catalyst (VMC-1) resulted in a typical heterogeneous polymer, as demonstrated by broad MFR and DSC Melting Point at above 120°C as set forth in Table 2.

Comparative Example D. Example C was repeated, except that another supported V catalyst (VMC-2) was used with similar results.

Examples 5 and 6: These examples demonstrate that when DEAC/ETCA was used as a cocatalyst/promoter combination with the V catalyst (VMC-1), homogeneous copolymers were produced at both 50°C and 65°C, respectively (Table 2). This is shown by narrow MFR and presence of a peak with DSC Melting Point at below 120°C [Figure 1].

Example 7: This example showed that TIBA can be used in combination with a strong chlorinating promoter, such as PCP, to produce homogeneous resin.

Example 8: In this example the use of TIBA alone, without a promoter, resulted in a heterogeneous polymer.

From these examples it can be seen that TIBA alone or with a weak promoter (e.g., CHCl₃) resulted in a heterogeneous resin product. Whereas, the TIBA in combination with a strong promoter (e.g., PCP) of the present invention resulted in a homogeneous resin product.

Examples 9 and 10: From these examples it can be seen that another V catalyst (VMC-2), when used with DEAC/ETCA, also produced homogeneous copolymers at both 50°C and 65°C, respectively.

Examples 11 and 12: These examples demonstrated that using the above principle on the role of a strong promoter likewise applies to another vanadium catalyst with the analogous results to Examples 7 and 8, respectively.

These results clearly demonstrate that the cocatalyst/promoter combination of the present invention is crucial for homogeneity of the produced copolymers, and that excellent homogeneity can be achieved with DEAC/ETCA or TIBA/PCP systems, but not with a TIBA/CHCl₃ system.

### List of Abbreviations and Terms

DEAC = diethylaluminum chloride
TIBA = triisobutylaluminum
CHCl₃ = chloroform
ETCA = ethyl trichloroacetate
PCP = perchloropropene
C₂ = ethylene
C₃ = propylene
ENB = ethylidene norbornene
mmol = millimole
V/MgCl₂ = Vanadium species supported on MgCl₂
VMC = Vanadium-Magnesium Catalyst
VMC-1 = VOCl₃/DEAC/MgCl₂
VMC-2 = VOCl₃/VO(OPr)₃/DEAC/MgCl₂
NMR = nuclear magnetic resonance
BET = specific surface area of catalyst support particles determined in accordance with the Surface Area Measurement Method of Brunauer, Emmett, and Teller.
EPDM = ethylene/ propylene/ ethylidene norbornene terpolymer rubber.
Cat Prod (g/mmolV/hr) = the amount of polymer (EPDM or 1-hexene /ethylene copolymer) produced in grams per millimole of vanadium per hour.
Flow Index (g/10 min) = flow index is determined under ASTM-1238, Condition F, at 190° C and 21.6 kilograms.
Melt Index (g/10 min) = melt index is determined under ASTM-1238, Condition F, at 190° C and 2.16 kilograms.
MFR = Melt Flow Ratio = Flow Index/Melt Index. An MFR value below 40 is considered moderate to narrow, while MFRs of 70 or higher are considered to be broad.
Density (g/cm³) = Specific gravity of a polymer.
BBF = Butyl Branch Frequency = Number of butyl branches per 1,000 carbon atoms in a polymer chain.
DSC = Differential Scanning Calorimetry.
DSC MP, °C = Melting Point of a polymer under DSC test. For medium and low density copolymers, melting point at above 120° C usually indicates the presence of a heterogeneous polymer fraction.
Cure: M(H) minus M(L) = Formula No. 1 of ASTM D-3568 is used following Procedure 6.1.2 for a miniature internal mixer and Practice D-3182. A Brabender™ mixer with a mixing head maintained at 90° C is used. Vulcanization characteristics are measured following ASTM D-2084 test methods for the ODR. The cure meter test cavity is maintained at 160° C. The disk is oscillated through a 1° arc rotational amplitude at 100 cpm. The force required to rotate the disk to maximum amplitude is continuously measured. The difference between the maximum torque resistance, M(H), and M(L) is recorded. Cure values of less than 20 are considered poor; cure values from 20 to 25 are considered satisfactory; and cure values above 25, especially above 30, are considered excellent.

Examples A and B are comparative examples. Using a TIBA cocatalyst and a chloroform promoter, Examples A and B have very low cure values.

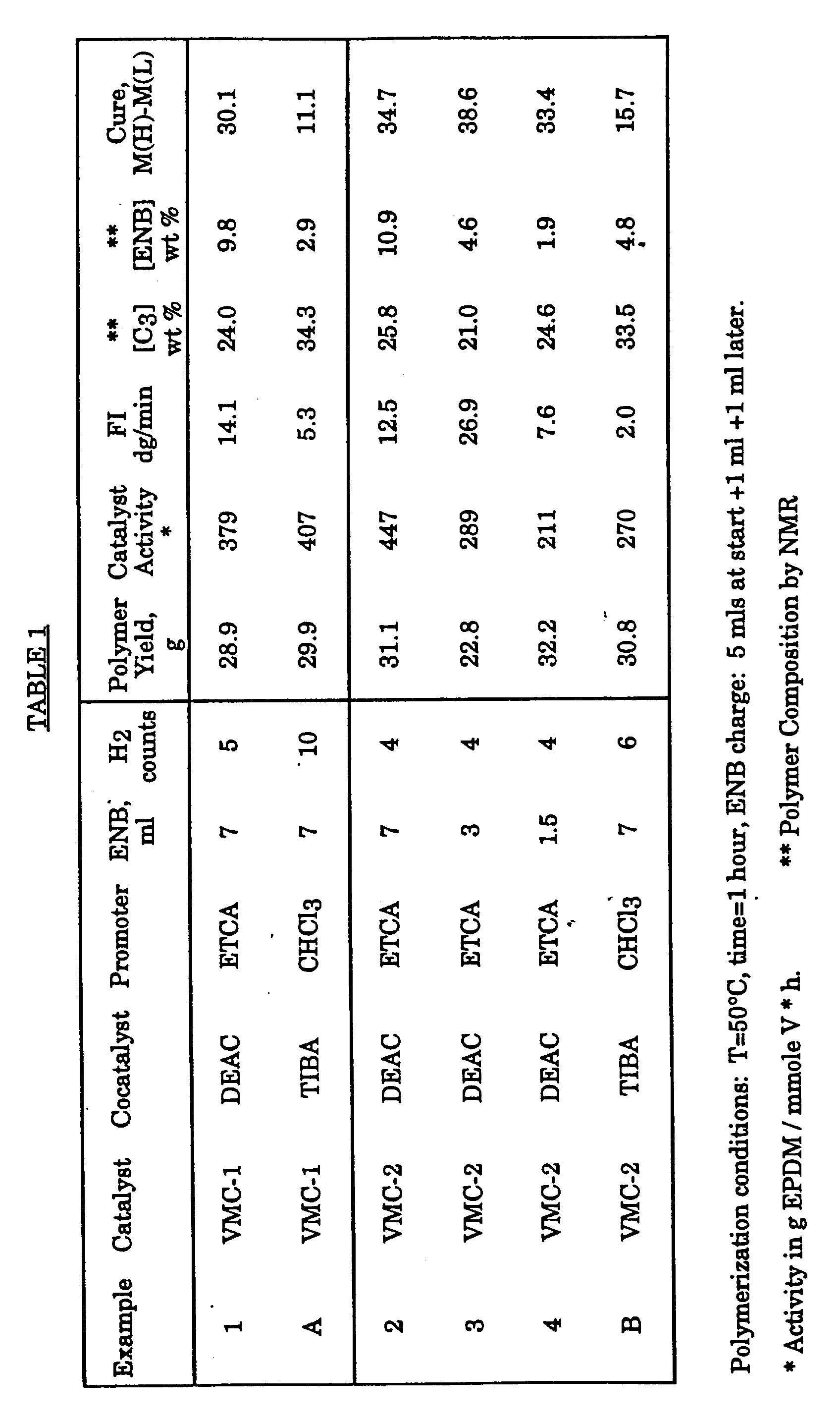

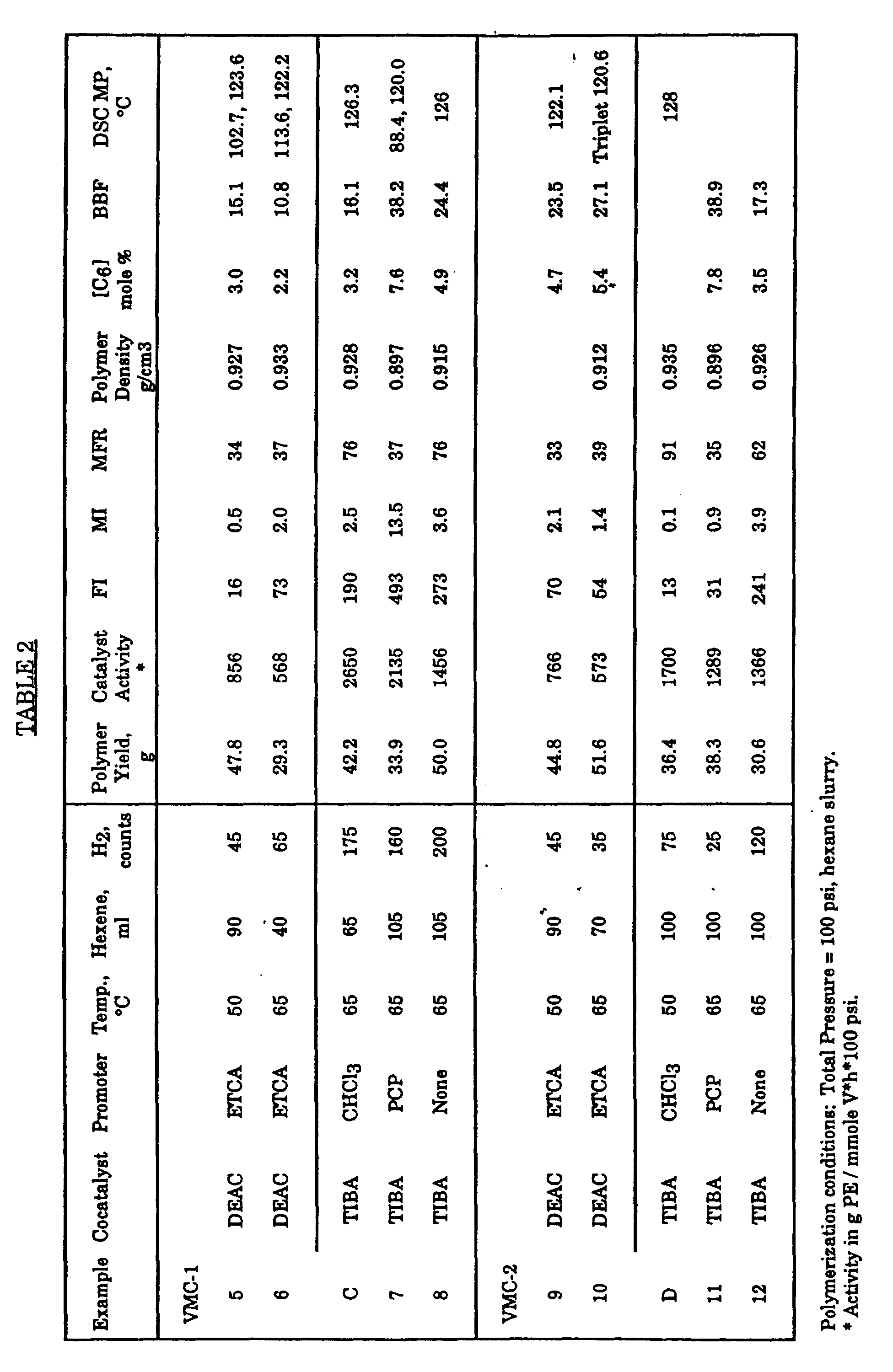

## Claims

1. A process for polymerizing one or more olefins, which process comprises reacting one or more alpha olefins having 2 to 12 carbon atoms, optionally a diene, and hydrogen, under polymerization conditions, in the presence of a catalyst system comprising:
(A) a transition metal catalyst comprising a vanadium compound precipitated within a liquid hydrocarbon by reduction reaction of vanadium on a spherical support of magnesium chloride, which precipitation is carried out by bringing into contact within the liquid hydrocarbon: (a) a vanadium-reducing agent chosen from organometallic compounds, with (b) a vanadium compound soluble in the liquid hydrocarbon, containing at least one halogen and optionally at least one alkoxy group, and (c) a solid support containing (i) from 80 to 99.5 mol % of magnesium dichloride and optionally (ii) from 0.5 to 20 mol % at least one organic electron-donor compound, free from labile hydrogen; and
(B) a cocatalyst-promoter combination which is
(1) an aluminum alkyl cocatalyst having the formula AlR₃ wherein each R is independently alkyl having 1 to 14 carbon atoms and a promoter that is (a) a saturated or unsaturated aliphatic halocarbon having at least 3 carbon atoms and at least 6 halogen atoms or (b) a haloalkyl substituted aromatic hydrocarbon wherein the haloalkyl substituent has at least 3 halogen atoms; or
(2) an alkylaluminum halide cocatalyst having the formula AlR₍₃₋ₐ₎Xₐ wherein each R is independently an alkyl having 1 to 14 carbon atoms, each X is independently chlorine, bromine, or iodine, and a is 1 to 2; and a promoter that is selected from the group consisting of (a) a chlorinated ester having at least 2 chlorine atoms; (b) a saturated or unsaturated aliphatic halocarbon having at least 3 carbon atoms and at least 6 halogen atoms; and (c) a haloalkyl substituted aromatic hydrocarbon wherein the haloalkyl substituent has at least 3 halogen atoms.

2. The process according to Claim 1 wherein the cocatalyst-promoter combination is an aluminum alkyl cocatalyst selected from the group consisting of triisobutylaluminum, trihexylaluminum, diisobutylaluminum hydride, dihexylaluminum hydride, diisobutylhexylaluminum, isobutyl- dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum and tritolylaluminum and a promoter selected from the group consisting of perchloropropene, hexachloropropane, heptachloropropane and octachloropropane.

3. The process according to Claim 1 wherein the cocatalyst-promoter combination is an aluminum haloalkyl cocatalyst selected from the group consisting of dibutylaluminum chloride, diethylaluminum chloride, dimethylchloride, butylaluminum sesquichloride, ethylaluminum sesquichloride and a promoter selected from the group of consisting of ethyl trichloroacetate, methyl trichloroacetate, perchloropropene, hexachloropropane, heptachloropropane and octahloropropane.

4. The process according to Claim 1 wherein the cocatalyst-promoter combination is (i) diethylaluminum chloride-ethyl trichloroacetate; (ii) triisobutylaluminum-perchloropropene; (iii) triethylaluminum-perchloropropene, or (iv) trimethylaluminum-perchloropropene.

5. A process according to any one of the preceding claims wherein the organic electron-donor compound is selected from the group consisting of ethers, thioethers, sulphones, sulphoxides, phosphines, amines and amides.

6. A process according to any one of the preceding claims wherein the vanadium compound corresponds to either of the two general formulae:
V(OR⁶)₄₋ₘXₘ or VO(OR⁶)₃₋ₙXₙ
in which formulae,
R⁶ is an alkyl radical having from 1 to 12 carbon atoms;
X is an halogen atom;
m is an integral or fractional number ranging from 0.2 to 3.8; and
n is an integral or fractional number ranging from 0.14 to 2.85.

7. A process according to any one of the preceding claims wherein the vanadium reducing agent is selected from the group consisting of an organoaluminum, an organomagnesium and an organozinc compound.

8. A process according to any one of the preceding claims wherein the polymerization process employs a fluidization aid selected from the group consisting of carbon black, talc, silica, clay and mixtures thereof.

9. A process for the polymerization of a homogeneous EPR or EPDM comprising reacting ethylene, propylene, optionally a diene, and hydrogen in the presence of a catalyst system comprising:
(A) a transition metal catalyst comprising a vanadium compound precipitated within a liquid hydrocarbon by reduction reaction of vanadium on a spherical support of magnesium chloride, which precipitation is carried out by bringing into contact within the liquid hydrocarbon: (a) a vanadium-reducing agent chosen from organometallic compounds, with (b) a vanadium compound soluble in the liquid hydrocarbon, containing at least one halogen and optionally at least one alkoxy group, and (c) a solid support containing (i) from 80 to 99.5 mol % of magnesium dichloride and optionally (ii) from 0.5 to 20 mol % at least one organic electron-donor compound, free from labile hydrogen; and
(B) a cocatalyst-promoter combination which is
(1) an aluminum alkyl cocatalyst having the formula AlR₃ wherein each R is independently alkyl having 1 to 14 carbon atoms and a promoter that is (a) a saturated or unsaturated aliphatic halocarbon having at least 3 carbon atoms and at least 6 halogen atoms or (b) a haloalkyl substituted aromatic hydrocarbon wherein the haloalkyl substituent has at least 3 halogen atoms; or
(2) an alkylaluminum halide cocatalyst having the formula AlR₍₃₋ₐ₎Xₐ wherein each R is independently an alkyl having 1 to 14 carbon atoms, each X is independently chlorine, bromine, or iodine, and a is 1 to 2; and a promoter that is selected from the group consisting of (a) a chlorinated ester having at least 2 chlorine atoms; (b) a saturated or unsaturated aliphatic halocarbon having at least 3 carbon atoms and at least 6 halogen atoms; and (c) a haloalkyl substituted aromatic hydrocarbon wherein the haloalkyl substituent has at least 3 halogen atoms.

10. A process according to claim 9 wherein (a)the cocatalyst-promoter combination is (i) dimethylaluminum chloride-ethyl trichloroacetate; (ii) triisobutylaluminum-perchloropropene; (iii) triethylaluminum-perchloropropene, or (iv) trimethylaluminum-perchloropropene, (b) the polymerization is conducted in the gas phase in a fluidized bed at or above the sticking temperature of the polymer, (c) the diene is 1,4-hexadiene or 5-ethylidene-2-norbornene, (d) a fluidization aid selected from the group consisting of carbon black, talc, silic, clay and mixtures thereof is employed.
